(19) Europäisches Patentamt
European Patent Office
Office européen des brevets

(11) **EP 3 192 604 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(51) Int Cl.:
***B23C 5/10*** *(2006.01)*

(21) Anmeldenummer: **17020015.8**

(22) Anmeldetag: **12.01.2017**

(54) **SCHAFTFRÄSER-VOLLWERKZEUG**

SOLID END MILL

FRAISE EN BOUT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2016 DE 102016100449**

(43) Veröffentlichungstag der Anmeldung:
**19.07.2017 Patentblatt 2017/29**

(73) Patentinhaber:
• **Maier GmbH**
**94369 Oberschneiding (DE)**
• **Fraunhofer-Gesellschaft zur Förderung der angewandten Forschung e.V.**
**80686 München (DE)**

(72) Erfinder:
• **Maier, Michael**
**94339 Leiblfing (DE)**
• **Westermann, Hans Henrik**
**31141 Hildesheim (DE)**

(74) Vertreter: **Meyer, Thorsten**
**Meyer Patentanwaltskanzlei**
**Pfarrer-Schultes-Weg 14**
**89077 Ulm (DE)**

(56) Entgegenhaltungen:
**US-A1- 2007 248 422 US-A1- 2007 297 864**

EP 3 192 604 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Schaftfräser-Vollwerkzeug mit wenigstens einer Hauptschneide mit einer Schneidkante auf seinem Umfang gemäß dem Oberbegriff des Anspruchs 1. Ein Beispiel eines solchen Fräswerkzeugs zeigt die US2007/297864A1. Bei bekannten Fräswerkzeugen treten bei Fräsvorgängen Schwingungen auf, die die mögliche erreichbare Standzeit des Werkzeugs sowie auch Fertigungs- bzw. Bearbeitungstoleranzen negativ beeinflussen. Diese Schwingungen gilt es zu minimieren und im Idealfall zu eliminieren.

Eine ebenso bekannte Erhöhung der Schneidenanzahl eines Fräswerkzeugs bringt Verbesserungen der Bearbeitung in Hinblick auf die Erregung des Systems, bestehend aus Fräswerkzeug und Werkzeugmaschine, in seinen Eigenfrequenzen. Dieses bekannte Vorgehen verbessert die Ratterneigung führt aber wiederum zu einer erhöhten Passivkraft, was eine größere Auslenkung des Fräswerkzeugs nach sich zieht. Weiterhin können Ratterschwingungen durch Verkleinerung der Schnittkraft, also beispielsweise eine Änderung des Vorschubs und bzw. oder der Schnitttiefe, verringert werden. Durch diese Maßnahme ist die Bearbeitungszeit jedoch länger und somit der Prozess wirtschaftlich nachteilig beeinflusst.

Induzierte Schwingungen im Werkzeug-Werkstück-Werkzeugmaschine-System, die durch Ein- und Austrittsfrequenzen hervorgerufen werden, können auf die Zahnteilung der Fräswerkzeuge und auf die angewendeten Prozessparameter zurückgeführt werden. Durch eine Anregung im Eigenfrequenzbereich der Komponenten wird der Prozess instabil und es tritt Rattern auf. Eine Anpassung der Schneidengeometrie, beispielsweise durch eine ungleichmäßige Teilung der Schneiden, also differierende Teilungswinkel ($\mu_{t1} \neq \mu_{t2}$), wirkt diesen Schwingungen entgegen.

Der Drallwinkel des Fräswerkzeugs nimmt ebenfalls einen direkten Einfluss auf das Schwingungsverhalten des Fräswerkzeugs. Durch eine Vergrößerung des Drallwinkels kann die Laufruhe des Fräswerkzeugs verbessert werden, da die Länge der Schneide, die sich im Eingriff mit dem Werkstück befindet, vergrößert wird. Bei mehrschneidigen Fräswerkzeugen bewirkt ein größerer Drallwinkel auch, dass sich mehrere Schneiden gleichzeitig im Eingriff befinden, wodurch Schwankungen der Schnittkräfte reduziert werden und sich somit eine größere Laufruhe ergibt. Hierdurch vergrößern sich jedoch wiederum die Auslenkung und die Passivkraft, die wiederum zu einer größeren Axialkomponente der Zerspankraft - diese versucht das Werkzeug aus der Einspannung herauszuziehen - führen. Durch die variable Gestaltung der Drallwinkel der Schneiden können Schwingungen am Fräswerkzeug minimiert werden, was zu einer längeren Standzeit führt.

Variable Drallwinkel bei einem Fräswerkzeug, also beispielsweise eines, bei dem die Schneiden zwei verschiedene Drallwinkel aufweisen, die jeweils gegenüberliegenden Drallwinkel aber identisch sind, werden somit verwendet, um die Auftrittswahrscheinlichkeit von Prozessschwingungen zu minimieren.

Schaftfräser-Vollwerkzeuge mit ungleich geteilten Schneiden ($\mu_{t1} \neq \mu_{t2}$) und variablen Drallwinkeln deren Größe sich von

Schneide zu Schneide unterscheidet ($\lambda_1 \neq \lambda_2$), sind seit einigen Jahren bekannt und am Markt verfügbar. Ein Vorteil entsprechend ausgeführter Schaftfräser-Vollwerkzeuge ist, dass die Auftretenswahrscheinlichkeit von Prozessschwingungen reduziert wird und dadurch längere Standzeiten erreicht werden können. Zudem lassen sich mit ungleich geteilten Schaftfräser-Vollwerkzeugen höhere Tiefenzustellungen bei großen Eingriffswinkeln realisieren und die Grenzschnitttiefe $a_{p\text{-}lim}$ kann dadurch signifikant gesteigert werden. Hierbei wird gleichzeitig die Prozessstabilität erhöht und die von der Fräsmaschine zur Verfügung gestellte Spindelleistung besser ausgenutzt.

Aus der US2007/0297864A1 ist ist ein Schaftfräser-Vollwerkzeug mit mehreren Hauptschneiden mit Schneidkanten auf ihrem Umfang bekannt, wobei eine Schneidkante in ihrer Abwicklung vom Umlauf-Zylinder einen Wendepunkt im stetigen Schneidkantenverlauf aufweist, ab welchem ein zuvor kleiner werdender Drallwinkel relativ zur Drehachse wieder zunimmt.

Aus der DE102008025961A1 ist ein Schaftfräser-Vollwerkzeug bekannt, bei dem die Schneidkanten mit einem Radius zur Stabilisierung der Schneide und Standzeiterhöhung verrundet sind.

Aufgabe der Erfindung ist es eine verbesserte Schaftfräser-Vollwerkzeuge zur Verfügung zu stellen, bei denen die Standzeit und Leistung erhöht ist.

Diese Aufgabe wird durch ein Schaftfräser-Vollwerkzeug mit wenigstens einer Hauptschneide mit einer Schneidkante auf seinem Umfang nach den Merkmalen des Anspruchs 1 gelöst.

Erfindungsgemäß ist vorgesehen, dass wenigstens eine Schneidkante in ihrer Abwicklung vom Umlauf-Zylinder einen Wendepunkt im stetigen Schneidkantenverlauf aufweist ab welchem ein zuvor kleiner werdender Drallwinkel relativ zur Achse wieder zunimmt. Des weiteren ist vorgesehen, dass wenigstens eine Schneidkante in ihrer Abwicklung, dargestellt in einem Koordinatensystem (XY), nacheinander die Primzahlen $X_1$=7, $X_2$=13, $X_3$=19 und $X_4$=29 auf der x-Achse (Mantelabwicklungs-Achse) sowie die dazugehörigen Werte $Y_1$=10, $Y_2$=20, $Y_3$=30, und $Y_4$=40 auf der y-Achse (Drehachsen-Länge, bzw. Einsatztiefe des Werkzeugs im Material) einschließt. Hierdurch ist auf besonders effektive Weise eine markante Leistungssteigerung in der Schnittleistung als auch eine erhöhte Standzeit ermöglicht.

Durch experimentelle Untersuchungen konnte gezeigt werden, dass durch diese Ausführung der Schneidkanten ein deutlich ruhigeres Bearbeitungsverhalten erzielt werden konnte. Schwingungen wurden signifikant reduziert und die Standzeit des Werkzeugs um bis zu 60 % gesteigert. Gleichzeitig konnte eine Steigerung der Vorschubgeschwindigkeit und damit eine Verkürzung der Bearbeitungszeit um bis zu 50 % erreicht werden.

Vorteilhaft wirkt sich bei dem neuartigen Werkzeug der Umstand aus, dass sich die Winkelbeziehungen der Schneide gegenüber der betrachteten Eingriffsstelle kontinuierlich ändern und dadurch das Eingriffsverhalten und die Spanbildung selbst vorteilhaft beeinflusst werden.

Durch den im Prozess gleichbleibenden Zahnvorschub $f_z$ und die kontinuierliche Änderung des Drallwinkels ist die mittlere Spanungsdicke $h_m$ während eines Schneideneingriffs nicht konstant. Dabei gilt der in der nachfolgenden Gleichung 2 gezeigte mathematische Zusammenhang:

$$h_m = f_z * \cos\lambda \qquad \mathtt{mit} \ \cos\lambda \neq \mathtt{const}$$

Durch die variable Mittenspandicke wird der Anstieg der Schnittkraft beim Schneideneintritt ins Material von einem proportionalen in einen degressiven Verlauf überführt. Dadurch können Spitzen auftretender Zug- und Druckspannungen an der Schneide deutlich reduziert werden. Dies wirkt sich günstig auf die Verschleißfestigkeit der Schneidkante aus und führt zu längeren Standzeiten.

In Kombination damit hat sich ergeben, dass wenn vorteilhafterweise die Schneidkante verrundet ist, insbesondere mit einem Schneidkanten-Radius von 10 µm bis 20 µm, eine weitere Leistungssteigerung eintritt.

Vorteilhafterweise ist vorgesehen, dass der Schneidkantenverlauf der Schneidkanten entlang einer Kantenfunktion auf der Abwicklung durch ein Polynom f(x) mit Wendepunkt angenähert ist, vorzugsweise durch ein Polynom dritten Grades, wobei f(x) entlang der Dreh-Achse verläuft und x auf der Mantelabwicklung.

Von Vorteil sind mehrere Schneidkanten vorhanden, wobei die Schneidkanten unterschiedliche oder teilweise überdeckende Bereiche des Schneidkantenverlaufs und/oder der Kantenfunktion einschließen.

Eine vorteilhafte Ausgestaltung der Erfindung sieht vor, dass mehrere Schneidkanten vorhanden sind, wobei wenigstens eine Schneidkante entlang einer gespiegelten Kantenfunktion einer anderen Schneidkante verläuft.

Eine vorteilhafte Weiterbildung der Erfindung sieht vor, dass die Kantenfunktion durch ein Polynom

$$\mathtt{f(x)} \ = \ \mathtt{-a*x}^3 \ \mathtt{+b*x}^2 \ \mathtt{+c*x} \ \mathtt{+d}$$

beschrieben ist, wobei die Parameter a, b, c und d aus den positiven reellen Zahlen gewählt sind. Hierdurch ist ein Kantenverlauf technisch hinreichend genau durch eine mathematische Annäherung darstellbar.

Der Freiwinkel $\alpha$ der Hauptschneide ist nach einer vorteilhaften Ausgestaltung der Erfindung zwischen 9° und 11°, insbesondere zu 10°, gewählt.

Von Vorteil ist vorgesehen, dass die Hauptschneiden zueinander einen differierenden Teilungswinkel, insbesondere 80°/100°, aufweisen.

Eine besonders vorteilhafte Ausgestaltung der Erfindung sieht vor, dass der Spanwinkel einen veränderlichen Wertebereich entlang der Hauptschneide durchläuft und sich analog zum Drallwinkel ändert.

Das Schaftfräser-Vollwerkzeug kann weiterhin von Vorteil mit scharfer Schneidecke, Schutzfase oder Eckenradius ausgeführt sein.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:

Fig. 1    eine schematische Schrägansicht eines erfindungsgemäßen Schaftfräser-Vollwerkzeugs,

Fig. 2    eine Ansicht des Schaftfräser-Vollwerkzeugs aus Fig. 1 in Drehachsenrichtung,

Fig. 3    eine schematische Darstellung einer Abwicklung einer erfindungsgemäßen Schneidkante,

Fig. 4    eine schematische Seitenansicht eines erfindungsgemäßen Schaftfräser-Vollwerkzeugs und einer Darstellung der Abwicklung dessen Schneidkanten auf dem Umlauf-Zylinders,

Fig. 5    ein erster Graph eines Schneidkantenverlaufs einer ersten Schneide mit d=1,

Fig. 6      ein erster Graph eines Schneidkantenverlaufs einer ersten Schneide mit d=5,

Fig. 7      ein erster Graph eines Schneidkantenverlaufs einer ersten Schneide mit d=10,

Fig. 8      ein erster Graph eines Schneidkantenverlaufs einer ersten Schneide mit d=15,

Fig. 9      ein erster Graph eines Schneidkantenverlaufs einer ersten Schneide mit d=20,

Fig. 10      ein erster Graph eines Schneidkantenverlaufs einer ersten Schneide mit d=25,

Fig. 11      ein erster Graph eines Schneidkantenverlaufs einer zweiten Schneide mit d=1,

Fig. 12      ein erster Graph eines Schneidkantenverlaufs einer zweiten Schneide mit d=5,

Fig. 13      ein erster Graph eines Schneidkantenverlaufs einer zweiten Schneide mit d=10,

Fig. 14      ein erster Graph eines Schneidkantenverlaufs einer zweiten Schneide mit d=15,

Fig. 15      ein erster Graph eines Schneidkantenverlaufs einer zweiten Schneide mit d=20, und

Fig. 16      ein erster Graph eines Schneidkantenverlaufs einer zweiten Schneide mit d=25.

Die in den Figuren gleichen Bezugsziffern bezeichnen gleiche oder gleich wirkende Elemente.

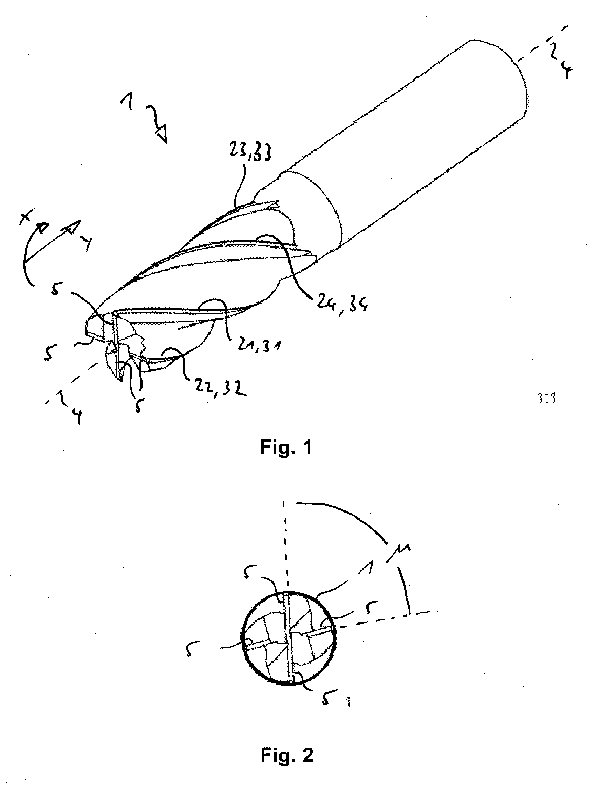

In Fig. 1 und 2 ist ein erfindungsgemäßes Schaftfräser-Vollwerkzeug 1 in einer schematischen Schrägansicht und in einer Ansicht in Drehachsenrichtung gezeigt.

Das Schaftfräser-Vollwerkzeug 1 ist im Beispiel mit vier Hauptschneiden 21, 22, 23, 24 mit jeweils einer Schneidkante 31, 32, 33, 34 auf seinem Umfang gezeigt.

Die Schneidkanten 31, 32, 33, 34 sind mit einem Schneidkanten-Radius von 10 $\mu$m bis 20 $\mu$m verrundet.

Was die Erfindung besonders auszeichnet ist, dass die Schneidkanten 31, 32, 33, 34 in ihrer Abwicklung vom Umlauf-Zylinder einen Wendepunkt im stetigen Schneidkantenverlauf aufweisen, ab welchem ein zuvor kleiner werdender Drallwinkel $\lambda$ relativ zur Drehachse 4 wieder zunimmt.

Der Freiwinkel $\alpha$ einer Hauptschneide 21, 22, 23, 24 ist zwischen 9° und 11°, insbesondere zu 10°, gewählt.

Der Spanwinkel $\gamma$ einer Hauptschneide 21, 22, 23, 24 durchläuft einen veränderlichen Wertebereich entlang der Hauptschneide und ändert sich analog zum Drallwinkel A.

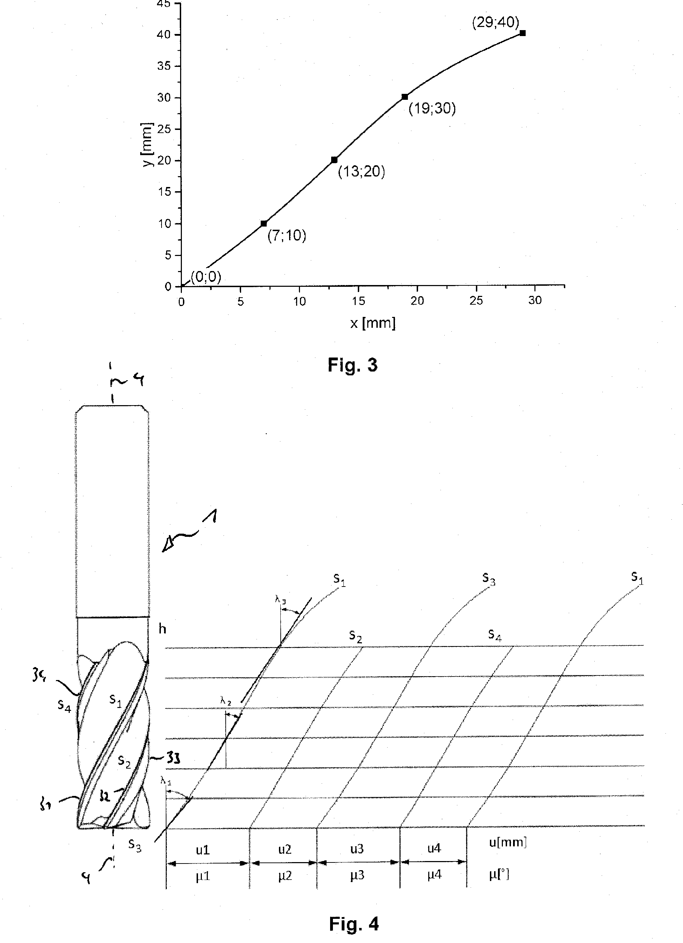

In Fig. 2 ist weiterhin ersichtlich, dass am Schaftfräser-Vollwerkzeug 1 Stirnschneiden 5 vorgesehen sind, und, dass die Hauptschneiden 21, 22, 23, 24 zueinander einen differierenden Teilungswinkel $\mu$, insbesondere 80°/100°, aufweisen siehe auch Fig. 4.

In Fig. 3 ist ein anderer Aspekt der Erfindung näher dargestellt, nachdem wenigstens eine Schneidkante 31, 32, 33, 34 in ihrer Abwicklung, dargestellt in einem xy-Koordinatensystem x, y, nacheinander die Primzahlen $X_1=7$, $X_2=13$, $X_3=19$ und $X_4=29$ auf der x-Achse (Mantelabwicklungs-Achse) sowie die dazugehörigen Werte $Y_1=10$, $Y_2=20$, $Y_3=30$, und $Y_4=40$ auf der y-Achse (Drehachsen-Länge, bzw. Einsatztiefe des Werkzeugs im Material) in ihrem Schneidkantenverlauf einschließt.

Wie auch in der Fig. 3 gezeigt wird der Schneidkantenverlauf der Schneidkanten 31, 32, 33, 34 zwischen und angenähert einschließlich der Punkte Xi,Yi entlang einer Kantenfunktion auf der Abwicklung durch ein Polynom f(x) mit Wendepunkt angenähert. Wie im Beispiel gezeigt, vorzugsweise durch ein Polynom dritten Grades, wobei f(x) entlang der Dreh-Achse (Einsatztiefe) verläuft und x entlang der Mantelabwicklung.

Die Kantenfunktion ist bevorzugt durch ein Polynom der Art

$$f(x) = -a*x^3 + b*x^2 + c*x + d$$

beschrieben, wobei die Parameter a, b, c und d aus den positiven reellen Zahlen gewählt sind. Eine passende Skalierung kann dabei vorgesehen sein. Beispielsweise durch einen aufmultiplizierten Parameter, z.B. 0,5 bis 1,5.

In Fig. 4 ist eine bevorzugte Variante der Erfindung gezeigt, wonach mehrere aufeinanderfolgende Schneidkanten 31, 32, 33, 34 vorhanden sind, wobei die Schneidkanten 31, 32, 33, 34 unterschiedliche oder teilweise überdeckende Bereiche der Kantenfunktion bzw. des Schneidkantenverlaufs $S_1$, $S_2$, $S_3$, $S_4$, einschließen.

Gezeigt ist eine schematische Seitenansicht des Schaftfräser-Vollwerkzeugs und einer Darstellung der Abwicklung des Umlauf-Zylinders mit den Schneidkanten auf diesem.

Ebenfalls ersichtlich in dieser Darstellung ist der ungleiche Teilungswinkel $\mu_1=\mu_3$ und $\mu_2=\mu_4$ zu 80°/100°.

Der Verlauf der ersten (und dritten) Schneidkante (31, $S_1$) kann durch das nachfolgende Polynom beschrieben sein:

$$f(x) = \mathrm{a} * (\frac{-3\left(\frac{x}{a}\right)^3 + 111\left(\frac{x}{a}\right)^2 + 2000\left(\frac{x}{a}\right) + 600}{2000})$$

Schaftfräser werden als Vollwerkzeuge selten mit Durchmessern > 25 mm hergestellt. Dies resultiert hauptsächlich aus zwei Umständen. Zum einen weisen die als Vollmaterial ausgeführten Schneidstoffrohlinge, im Vergleich zu Werkzeuggrundkörpern aus Stahl, deutlich höhere Einkaufspreise auf und zum anderen wird die Produktion von Vollwerkzeugen größerer Durchmesser schnell unwirtschaftlich, weil mit dem Schleifen der Werkzeuge, durch große Abtragsvolumen, lange Maschinenlaufzeiten sowie erhöhte Verbräuche von Produktionsmitteln verbunden sind. Dafür können Vollwerkzeuge ihre Vorteile in den Durchmesserbereichen $\leq$ 25 mm ausspielen.

Mit der Festsetzung des Wertebereichs für den Parameter a mit

$$\mathrm{a} \in \mathbb{R} \ \mathrm{und} \ 0,05 \leq \mathrm{a} \leq 1,6$$

und dem Zusammenhang

$$a = \frac{d}{16}$$

wird der Geometrie der Schneidkante und deren exakten Skalierung für alle realisierbaren Werkzeugdurchmesser von 0,8 mm bis 25,6 mm genüge getan.

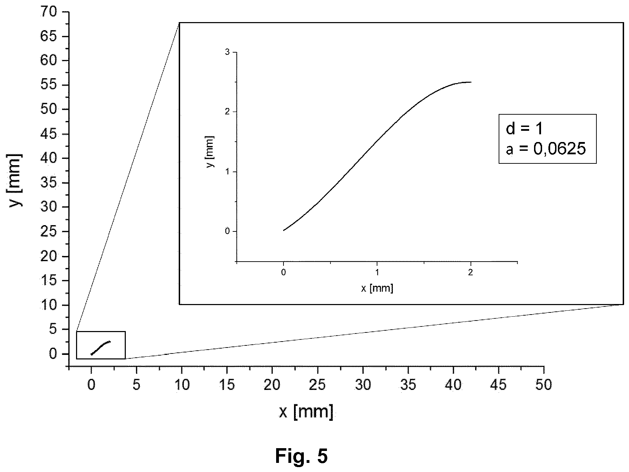

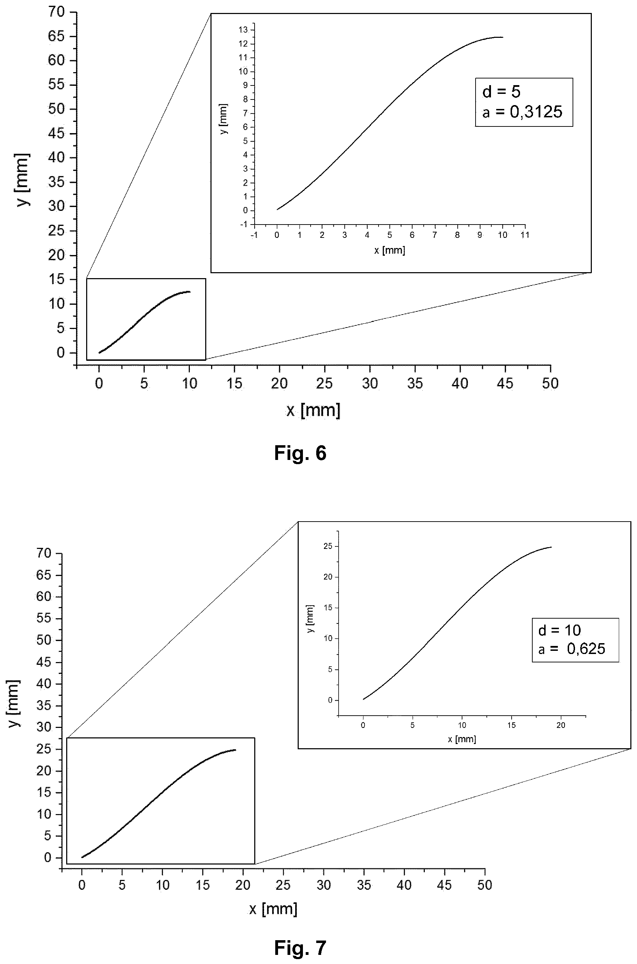

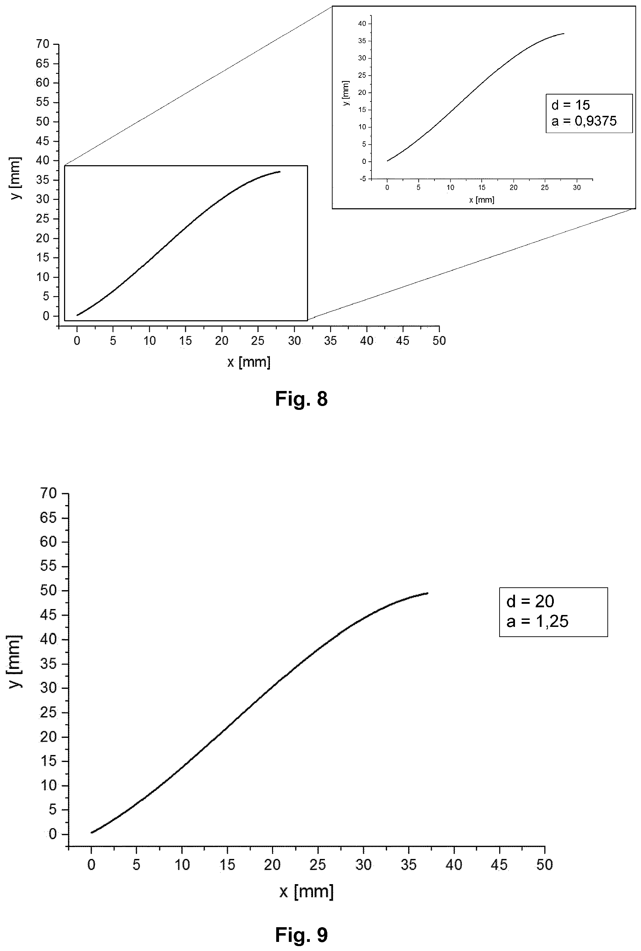

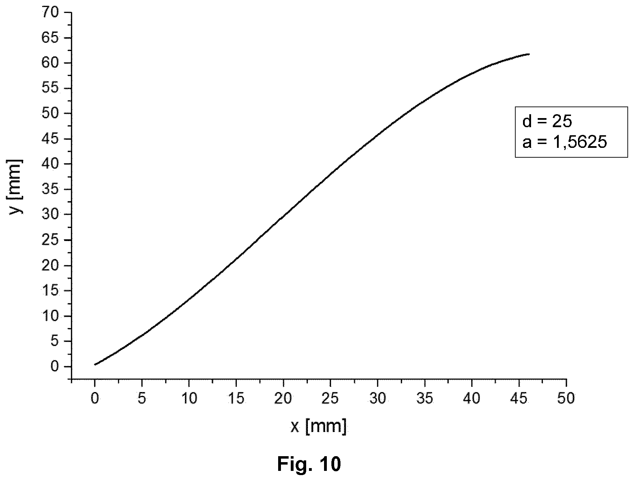

Für die Durchmesser d = 1 mm bis d = 25 mm sind die Graphen der skalierten Funktionen (Verlauf der ersten Schneidkanten) in den Fig. 5 bis 10 dargestellt. In den Fig. 5 bis 8 ist dabei ein Teilbereich vergrößert dargestellt.

Der Verlauf der zweiten (und vierten) Schneidkante (32, $S_2$) kann durch das nachfolgende Polynom beschrieben sein:

$$f(x) = \mathrm{a} * (\frac{-9\left(\frac{x}{a}\right)^3 + 130\left(\frac{x}{a}\right)^2 + 16500\left(\frac{x}{a}\right) - 2100}{10000})$$

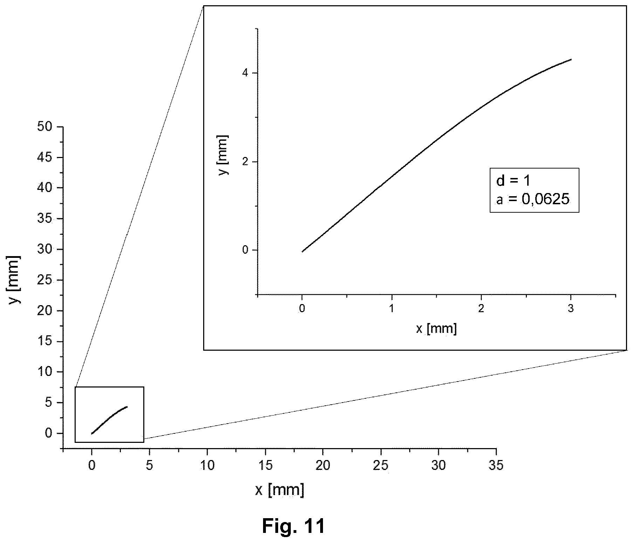

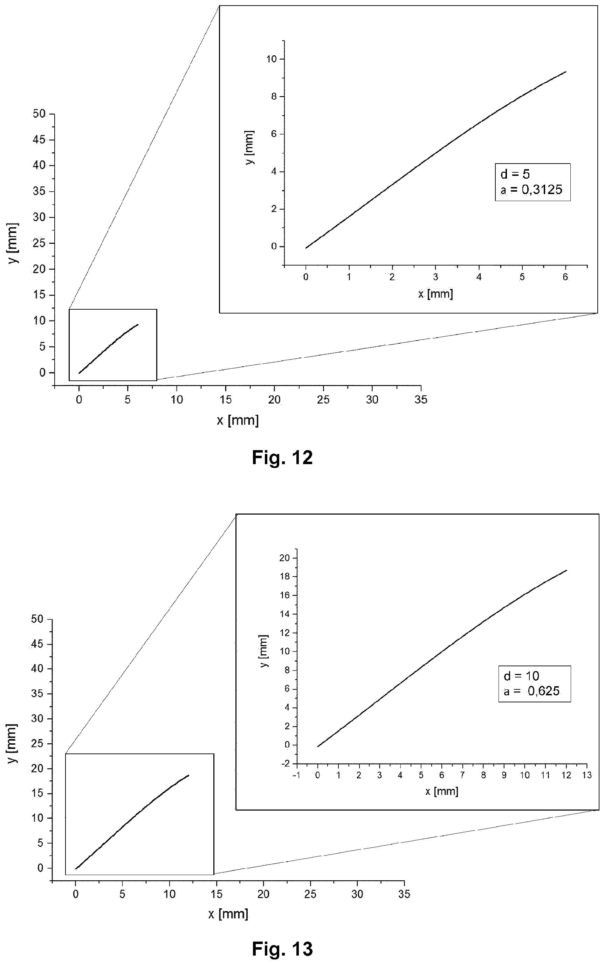

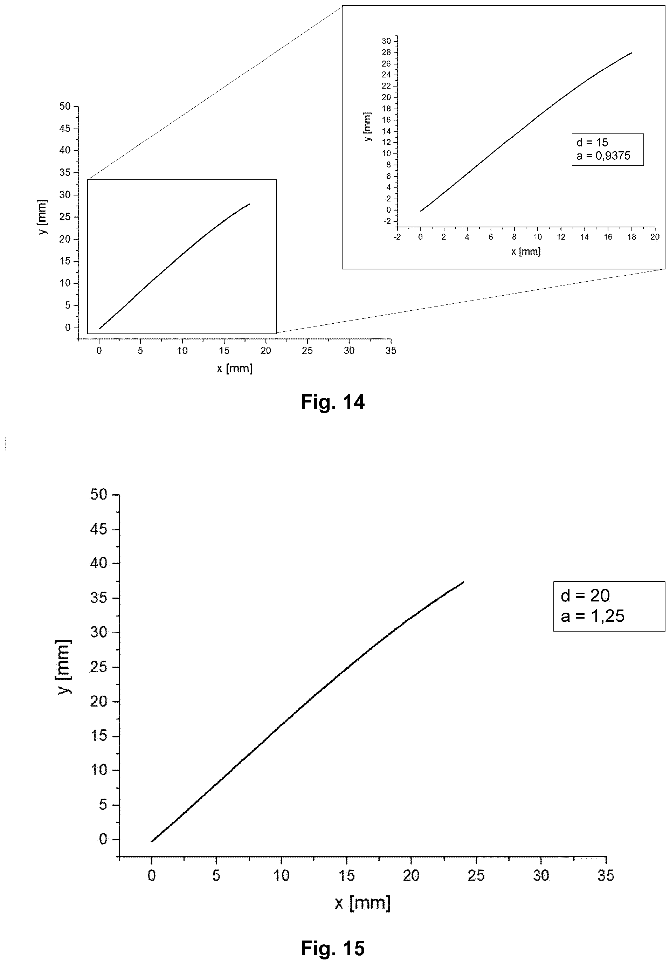

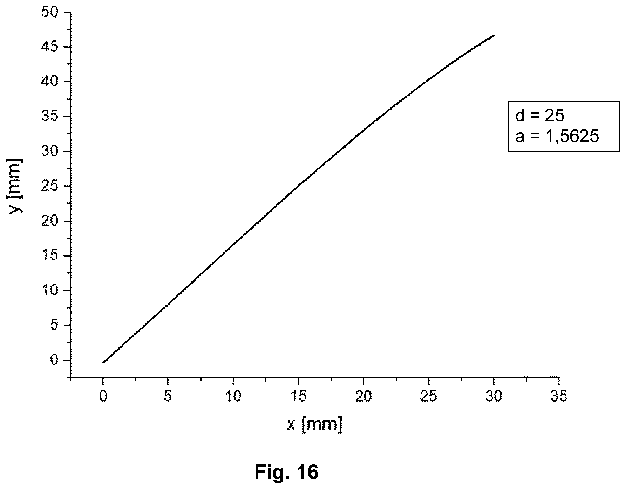

Für die Durchmesser d = 1 mm bis d = 25 mm sind die Graphen der skalierten Funktionen (Verlauf der zweiten Schneidkanten) in den Fig. 11 bis 16 dargestellt. In den Fig. 11 bis 14 ist dabei ein Teilbereich vergrößert dargestellt.

Die Form der Schneidkante nimmt bei beiden Funktionen eine S-Form an. Vom Startpunkt ausgehend verkleinert sich dabei der Drallwinkel $\lambda$ bis zum Wendepunkt der Funktion. Ab diesem Punkt nimmt der Drallwinkel dann wieder zu.

**Bezugszeichenliste**

1    Schaftfräser-Vollwerkzeug

21    Hauptschneide
22    Hauptschneide
23    Hauptschneide
24    Hauptschneide

31    Schneidkante

32    Schneidkante
33    Schneidkante
34    Schneidkante

4    Drehachse

5    Stirnschneiden

$\lambda$    Drallwinkel
$\alpha$    Freiwinkel
$\mu$    Teilungswinkel

**Patentansprüche**

1. Schaftfräser-Vollwerkzeug (1) mit wenigstens einer Hauptschneide (21, 22, 23, 24) mit einer Schneidkante (31, 32, 33, 34) auf seinem Umfang,
wobei wenigstens eine Schneidkante (31, 32, 33, 34) in ihrer Abwicklung vom Umlauf-Zylinder einen Wendepunkt im stetigen Schneidkantenverlauf aufweist ab welchem ein zuvor kleiner werdender Drallwinkel (A) relativ zur Drehachse (4) wieder zunimmt,
**dadurch gekennzeichnet,**
**dass** wenigstens eine Schneidkante (31, 32, 33, 34) in ihrer Abwicklung, dargestellt in einem xy-Koordinatensystem (x, y), nacheinander die Primzahlen $X_1=7$, $X_2=13$, $X_3=19$ und $X_4=29$ auf der x-Achse sowie die dazugehörigen Werte $Y_1=10$, $Y_2=20$, $Y_3=30$, und $Y_4=40$ auf der y-Achse in ihrem Schneidkantenverlauf einschließt.

2. Schaftfräser-Vollwerkzeug nach Anspruch 1,
**dadurch gekennzeichnet,**
**dass** die wenigstens eine Schneidkante (31, 32, 33, 34) verrundet ist mit einem Schneidkanten-Radius von 10 $\mu$m bis 20 $\mu$m.

3. Schaftfräser-Vollwerkzeug nach einem der Ansprüche 1 bis 2,
**dadurch gekennzeichnet,**
**dass** der Schneidkantenverlauf der wenigstens einen Schneidkante (31, 32, 33, 34) entlang einer Kantenfunktion auf der Abwicklung durch ein Polynom f(x) mit Wendepunkt angenähert ist, vorzugsweise durch ein Polynom dritten Grades, wobei f(x) entlang der Dreh-Achse verläuft und x auf der Mantelabwicklung.

4. Schaftfräser-Vollwerkzeug nach Anspruch 3,
**dadurch gekennzeichnet,**
**dass** mehrere Schneidkanten (31, 32, 33, 34) vorhanden sind, wobei die Schneidkanten (31, 32, 33, 34) unterschiedliche oder teilweise überdeckende Bereiche des Schneidkantenverlaufs und/oder der Kantenfunktion einschließen.

5. Schaftfräser-Vollwerkzeug nach einem der Ansprüche 1 bis 3,
**dadurch gekennzeichnet,**
**dass** mehrere Schneidkanten (31, 32, 33, 34) vorhanden sind, wobei wenigstens eine Schneidkante entlang einer gespiegelten Kantenfunktion f(x) einer anderen Schneidkante verläuft.

6. Schaftfräser-Vollwerkzeug nach einem der Ansprüche 1 bis 5,
**dadurch gekennzeichnet,**
**dass** die Kantenfunktion durch ein Polynom

$$f(x) = -a*x^3 + b*x^2 + c*x + d$$

beschrieben ist, wobei die Parameter a, b, c und d aus den positiven reellen Zahlen gewählt sind.

7. Schaftfräser-Vollwerkzeug nach einem der Ansprüche 1 bis 6,

**dadurch gekennzeichnet,**
**dass** der Freiwinkel ($\alpha$) einer Hauptschneide (21, 22, 23, 24) zwischen 9° und 11°, insbesondere zu 10°, gewählt ist.

8. Schaftfräser-Vollwerkzeug nach einem der Ansprüche 1 bis 7,
   **dadurch gekennzeichnet,**
   **dass** die Hauptschneiden (21, 22, 23, 24) zueinander einen differierenden Teilungswinkel ($\mu$), insbesondere 80°/100°, aufweisen.

9. Schaftfräser-Vollwerkzeug nach einem der Ansprüche 1 bis 7,
   **dadurch gekennzeichnet,**
   **dass** der Spanwinkel ($\gamma$) einer Hauptschneide (21, 22, 23, 24) einen veränderlichen Wertebereich entlang der Hauptschneide durchläuft und sich analog zum Drallwinkel (A) ändert.

**Claims**

1. A solid shank milling tool (1) having at least one main blade (21, 22, 23, 24) with a cutting edge (31, 32, 33, 34) on the circumference thereof,
   at least one cutting edge (31, 32, 33, 34) having a turning point in the steady curve of the cutting edge in the development thereof on the rotary cylinder, from which turning point a twist angle ($\lambda$), which was previously getting smaller, increases again relatively to the axis of rotation (4),
   **characterized**
   **in that** at least one cutting edge (31, 32, 33, 34) in its development, illustrated in an xy coordinate system (x, y), includes the prime numbers $X_1=7$, $X_2=13$, $X_3=19$ and $X_4=29$ on the x axis one after the other and the associated values $Y_1=10$, $Y_2=20$, $Y_3=30$, and $Y_4=40$ on the y axis in the curve of the cutting edge thereof.

2. The solid shaft milling tool according to Claim 1,
   **characterized**
   **in that** the at least one cutting edge (31, 32, 33, 34) is rounded with a cutting-edge radius of 10 $\mu$m to 20 $\mu$m.

3. The solid shaft milling tool according to one of Claims 1 to 2,
   **characterized**
   **in that** the curve of the cutting edge of the at least one cutting edge (31, 32, 33, 34) is approximated along an edge function on the development by means of a polynomial f(x) with turning point, preferably by means of a third degree polynomial, wherein f(x) runs along the axis of rotation and x runs on the development on the outer surface.

4. The solid shaft milling tool according to Claim 3,
   **characterized**
   **in that** a plurality of cutting edges (31, 32, 33, 34) are present, wherein the cutting edges (31, 32, 33, 34) include different or partially overlapping regions of the curve of the cutting edge and/or the edge function.

5. The solid shaft milling tool according to one of Claims 1 to 3,
   **characterized**
   **in that** a plurality of cutting edges (31, 32, 33, 34) are present, wherein at least one cutting edge runs along a mirrored edge function f(x) of a different cutting edge.

6. The solid shaft milling tool according to one of Claims 1 to 5,
   **characterized**
   **in that** the edge function is described by a polynomial

$$f(x) = -a*x^3 + b*x^2 + c*x + d$$

wherein the parameters a, b, c, and d are chosen from the positive real numbers.

7. The solid shaft milling tool according to one of Claims 1 to 6,
   **characterized**

**in that** the clearance angle ($\alpha$) of a main blade (21, 22, 23, 24) is chosen to be between 9° and 11°, particularly 10°.

8. The solid shaft milling tool according to one of Claims 1 to 7,
**characterized**
**in that** the main blades (21, 22, 23, 24) have a differing pitch angle ($\mu$), particularly 80°/100°, from one another.

9. The solid shaft milling tool according to one of Claims 1 to 7,
**characterized**
**in that** the cutting angle ($\gamma$) of a main blade (21, 22, 23, 24) passes through a variable value range along the main blade and changes analogously to the twist angle ($\lambda$).

**Revendications**

1. Fraise à queue monobloc (1) avec au moins une arête de coupe principale (21, 22, 23, 24) avec une arête de coupe (31, 32, 33, 34) sur sa périphérie
au moins une arête de coupe (31, 32, 33, 34) comportant dans son développement du cylindre rotatif un point d'inflexion dans le profil d'arête de coupe continu à partir duquel un angle d'hélice ($\lambda$) devenant préalablement plus petit augmente à nouveau par rapport à l'axe de rotation (4),
**caractérisée en ce que**
au moins une arête de coupe (31, 32, 33, 34) dans son développement, représenté dans un système de coordonnées xy (x, y), comprend successivement dans son profil d'arête de coupe les nombres premiers $X_1 = 7$, $X_2 = 13$, $X_3 = 19$ et $X_4 = 29$ sur l'axe x ainsi que les valeurs correspondantes $Y_1 = 10$, $Y_2 = 20$, $Y_3 = 30$ et $Y_4 = 40$ sur l'axe y.

2. Fraise à queue monobloc selon la revendication 1, **caractérisée en ce que** au moins une arête de coupe (31, 32, 33, 34) est arrondie avec un rayon d'arête de coupe de 10 $\mu$m à 20 $\mu$m.

3. Fraise à queue monobloc selon l'une quelconque des revendications 1 à 2, **caractérisée en ce que** le profil d'arête de coupe d'au moins une arête de coupe (31, 32, 33, 34) est estimé le long d'une fonction d'arête sur le développement par un polynôme f(x) avec point d'inflexion, de préférence par un polynôme du troisième degré, f(x) passant le long de l'axe de rotation et x sur le développé.

4. Fraise à queue monobloc selon la revendication 3, **caractérisée en ce qu'**il y a plusieurs arêtes de coupe (31, 32, 33, 34), les arêtes de coupe (31, 32, 33, 34) comprenant des zones différentes ou en partie couvrantes du profil d'arête de coupe et/ou de la fonction d'arête.

5. Fraise à queue monobloc selon l'une quelconque des revendications 1 à 3, **caractérisée en ce qu'**il y a plusieurs arêtes de coupe (31, 32, 33, 34), au moins une arête de coupe passant le long d'une fonction d'arête en miroir f(x) d'une autre arête de coupe.

6. Fraise à queue monobloc selon l'une quelconque des revendications 1 à 5, **caractérisée en ce que** la fonction d'arête est décrite par un polynôme

$$f(x) = -a \ast x^3 + b \ast x^2 + c \ast x + d,$$

les paramètres a, b, c et d étant choisis à partir de nombres positifs réels.

7. Fraise à queue monobloc selon l'une quelconque des revendications 1 à 6, **caractérisée en ce que** l'angle de dépouille ($\alpha$) d'une arête de coupe principale (21, 22, 23, 24) est choisi entre 9° et 11°, notamment à 10° .

8. Fraise à queue monobloc selon l'une quelconque des revendications 1 à 7, **caractérisée en ce que** les arêtes de coupe principales (21, 22, 23, 24) comportent un angle de pas ($\mu$) différent l'une par rapport à l'autre, notamment 80°/100°.

9. Fraise à queue monobloc selon l'une quelconque des revendications 1 à 7, **caractérisée en ce que** l'angle de dégagement ($\gamma$) d'une arête de coupe principale (21, 22, 23, 24) passe par une plage variable de valeurs le long de l'arête de coupe principale et varie de façon analogue à l'angle d'hélice ($\lambda$).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007297864 A1
- US 20070297864 A1
- DE 102008025961 A1